# EUROPEAN PATENT APPLICATION

(11) **EP 2 423 775 A1**
(43) Date of publication of application: **29.02.2012**
(21) Application number: 10425282.0
(22) Date of filing: 27.08.2010
(51) Int. Cl.: G05D 23/13

(54) **Water mixing device with automatic adjustment of flow rate and temperature**

(71) Applicant: Gebi Sistemi S.r.l., 28923 Verbania VB (IT)
(72) Inventor: Saporiti, Paolo, 28010 Agrate Conturbia NO (IT); Bisson, Paolo, 28921 Verbania VB (IT); Ruga, Manolo, 28024 Gozzano NO (IT)
(74) Representative: Concone, Emanuele

(57) **Abstract**

In a device for mixing hot and cold water with automatic adjustment of water flow rate and temperature through suitable valve means and a thermostatic group respectively driven by two electric motors (4, 5) operatively connected to a control unit (3) that receives the flow rate and temperature settings from a user interface, the valve means and the thermostatic group consist of a cartridge thermostatic mixing valve (14) with the temperature (14d) and flow rate (14e) controls located axially spaced at a same end of the cartridge (14) opposite to the valve means and driven by the electric motors (4, 5) that are arranged at a same end of the device, the cartridge (14) being partially received in a hydraulic group (16) in which the inlets for hot (16a) and cold (16b) water are formed in a plane perpendicular to the longitudinal axis of the hydraulic group (16) and respectively connected through relevant axial ducts to the inlets (14a, 14b) of the cartridge (14) while the outlet (14c) for the mixed water of the cartridge (14) is connected through a relevant axial duct to an axial outlet (16c) of the hydraulic group (16). Such a device is very compact and convenient to maintain and repair, thanks to the use of a pull-out cartridge (14) whose removal does not require the dismounting of any of the two motors (4, 5).

## Description

The present invention relates to devices for mixing hot and cold water in sanitary facilities (wash-basins, showers, bathtubs, etc.), and in particular to a device capable of achieving a precise automatic adjustment of the water flow rate and temperature.

It is known that conventional single-control mixing taps include a tap body, in which a cartridge mixing valve is removably inserted, and a control lever for controlling a valve group, within the cartridge, made up of a pair of ceramic disks which adjust the flow of hot and cold water through the translation and rotation, respectively, of a mobile disk over an underlying fixed disk. In this way, the extent of aperture of the ports formed in said disks for the passage of hot and cold water is changed, and so is the ratio between hot water and cold water when they are mixed prior to being conveyed to the tap mouth.

In order to maintain a constant temperature of the delivered water, both between two tap openings and during a same opening, it is possible to incorporate in a conventional tap a thermostatic group that acts downstream from the valve group by controlling the inflow of hot and cold water into the mixing chamber through respective ports. This control is carried out automatically by a thermosensitive bulb which causes the shifting of a slider suitable to change the aperture of said ports in the mixing chamber.

However, although known from some time, conventional cartridge thermostatic mixing valves still have some drawbacks of various nature. In the first place the large size of said valves makes them difficult to be received in taps and poses limitations to the tap design. Moreover, the setting of the flow rate and temperature values by the user is not always easy, in particular as to the repeatability of the flow rate setting.

Therefore mixing devices have been recently developed which are arranged between the network supplying the hot and cold water and the point of delivery of the mixed water. In this way there are no shape or size restraints, since the device is separate from the tap delivering the water, and the user only has to set the desired flow rate and temperature values on a simple interface that converts said settings into control signals for the mixing device.

An example of such a mixing device is illustrated in EP 2123954-A2 disclosing a single tubular body provided with two inlets, for the hot and cold water respectively, and an outlet for the mixed water, the water flows through both the inlets and the outlet being adjusted by relevant valve means. More specifically, the incoming water flows are adjusted by a thermostatic group with a thermosensitive bulb located in the central passage of the tubular body which causes the shifting of a slider suitable to change the aperture of the inflow ports of the hot and cold water, while the outgoing flow of mixed water is adjusted by a simple valve having a plug that slides in said central passage.

Both the thermostatic group and the delivery valve are controlled by respective electric motors, which are arranged at the opposite ends of the tubular body and operatively connected to the interface used by the user for setting the operation of the device.

Although this device is an improvement over conventional thermostatic taps, nonetheless it still has various drawbacks.

First of all it is very bulky in length, since both the inlets and the outlet are formed in planes perpendicular to the longitudinal axis of the tubular body at positions spaced along said axis. Moreover, the motors mounted at the opposite ends of the tubular body further contribute to increase the length of the device that is therefore difficult to place in small spaces.

Secondarily, the position of the thermostatic group inside the tubular body makes its maintenance or replacement quite complicated, since it is necessary to remove the relevant electric motor to gain access thereto. Considering that this type of device is very sensible to calcareous encrustations that may jeopardize its correct operation, given that the slider travel is of a few tenths of millimeter (usually max. 0,6 mm) therefore even small-size encrustations may prove detrimental, it is apparent that even a simple cleaning operation becomes difficult and time-consuming. The same applies also to the delivery valve, whose maintenance or repair requires to remove the relevant motor.

Furthermore, this delicate operation of the thermostatic group negatively affects the reliability and effectiveness of the mixing device, in particular due to the absence of a feedback circuit that checks whether the device actually operates according to the parameters set by the user.

Therefore the object of the present invention is to provide a device which overcomes the above-mentioned drawbacks. This object is achieved by means of a mixing device having the characteristics disclosed in claim 1. Other advantageous features of the present device are recited in the dependent claims.

A first important advantage of the mixing device according to the present invention is that of being much more compact, thanks to the use of a thermostatic cartridge with the temperature and flow rate controls located at the same end of the cartridge but axially spaced and driven by two motors that are in turn arranged in an overlapping and staggered configuration at a same end of the device, as well as to the use of a hydraulic group with an axial outlet for the mixed water.

A second significant advantage of this device resides in the great ease of maintenance and repair, thanks to the use of a pull-out thermostatic cartridge whose removal does not require the dismounting of any of the two motors. In this way, any intervention on the valve means can be carried out also at a place other than the location where the device is installed, since the device in the meantime can be easily provided with another thermostatic cartridge to ensure its continuity of operation.

Still another great advantage of the present device stems from its greater precision and reliability guaranteed, in its preferred embodiment, by a temperature sensor for the mixed water which provides a feedback signal to the control unit such that the control of the temperature set by the user does not rely only on the proper operation of the thermostatic group.

These and other advantages and characteristics of the mixing device according to the present invention will be clear to those skilled in the art from the following detailed description of an embodiment thereof, with reference to the annexed drawings wherein:

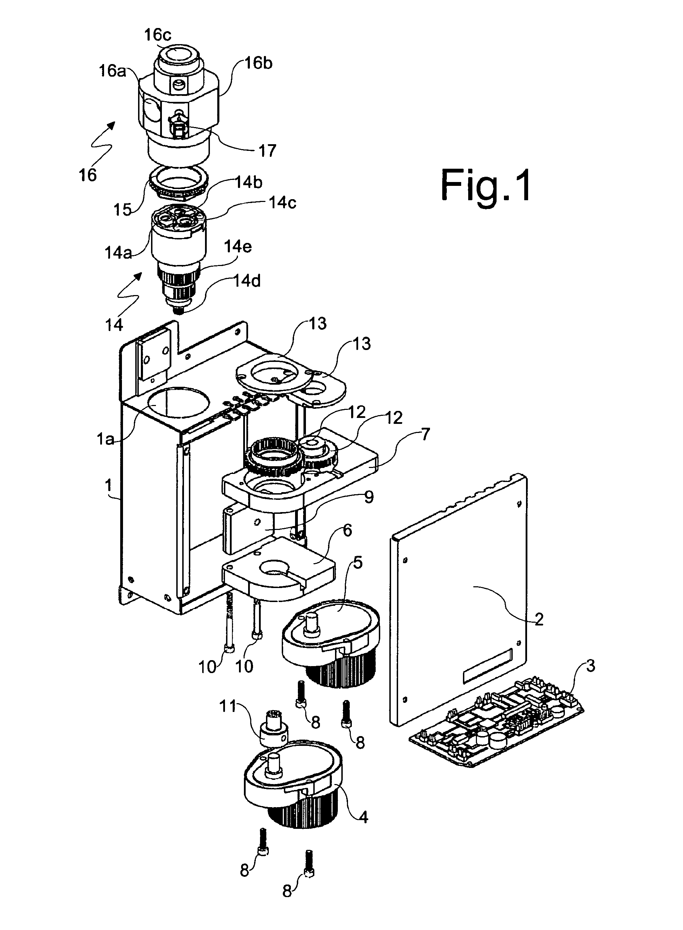

Fig.1 is a perspective exploded view of the device;
Fig.2 is a front view, without the cover, of the device in the assembled condition;
   and
Fig.3 is an enlarged view of a partial longitudinal section of the hydraulic group with the thermostatic cartridge mounted therein.

Referring to said figures, there is seen that a mixing device according to the present invention includes a casing 1, provided with a relevant cover 2, which houses the following components:
● an electronic board 3, acting as a control unit;
● a first electric motor 4, preferably a stepping motor, for the adjustment of the temperature and operatively connected to the control unit 3;
● a second electric motor 5, preferably a stepping motor, for the adjustment of the flow rate and operatively connected to the control unit 3;
● supports 6, 7 on which motors 4, 5 are respectively mounted by means of relevant screws 8, said supports 6, 7 being connected through a spacer 9 secured with relevant screws 10;
● a connector 11 suitable to couple the drive shaft of the first motor 4 to the temperature adjustment control;
● a pair of gears 12 suitable to couple the drive shaft of the second motor 5 to the flow rate adjustment control, said gears 12 being received in corresponding seats formed in support 7 and retained therein by relevant locking plates 13.

A circular opening 1a is formed in the top side of casing 1 to allow the introduction of a cartridge thermostatic mixing valve 14 facing downwards, i.e. with the temperature and flow rate controls inside casing 1 whereas the hot and cold water inlets 14a, 14b respectively and the outlet 14c for the mixed water remain outside the casing facing upwards. The cartridge 14 shown in the illustrated embodiment is a cartridge of the type disclosed in WO 2005/054972-A1, i.e. with a temperature control 14d arranged at the end opposite to the valve means and a flow rate control 14e axially spaced therefrom.

It should be noted that the up/down orientation of the illustrated device is used only for descriptive purposes, whereas the device can operate with any orientation and therefore be mounted in any position depending on the specific needs of the case. Moreover, the reference to the cartridge disclosed in the above-mentioned patent publication is meant to be merely exemplificative, since any other cartridge with the temperature and flow rate controls arranged at the same end and axially spaced could be used as well.

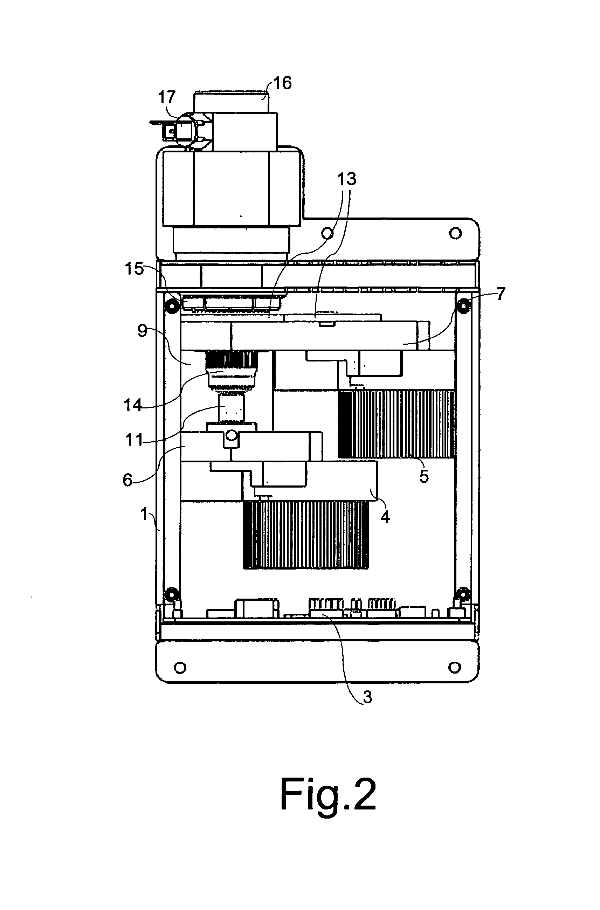

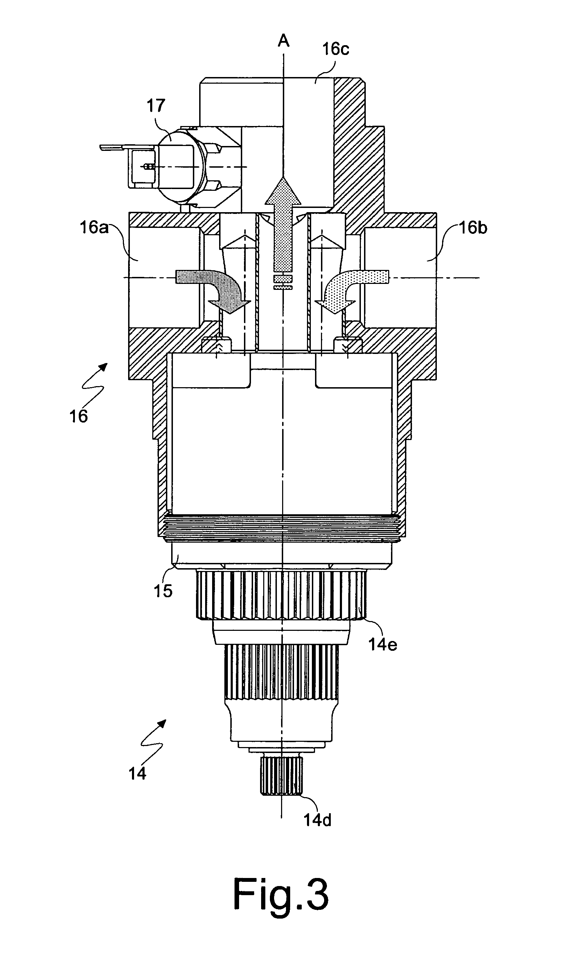

Cartridge 14 is secured by means of a locking ring 15 into a hydraulic group 16, as illustrated in detail in Fig.3. More specifically, the main body of cartridge 14 is received in the bottom portion of the hydraulic group 16 whereas controls 14d, 14e remain outside group 16 to be engaged respectively by connector 11 and gears 12 driven by the relevant motors 4, 5 as shown in Fig.2.

The inlets 16a for hot water and 16b for cold water are formed in the hydraulic group 16 in a plane perpendicular to the longitudinal axis A and respectively connected through relevant axial ducts to inlets 14a, 14b of cartridge 14, as indicated by the curved arrows, while outlet 14c for the mixed water is connected through a relevant axial duct to an axial outlet 16c of group 16, as indicated by the straight arrow.

A temperature sensor 17 is preferably arranged at the mixed water outlet 16c and operatively connected to the electronic board 3 to provide a feedback signal that allows to check the correspondence between the temperature of the delivered water and the temperature set by the user on an interface (not shown) through which it is possible to set also the flow rate.

This feedback circuit allows the control unit of the device to guarantee the maintenance of the set temperature even in the presence of significant changes in the supply conditions of the incoming water, such as a drop in the pressure of hot or cold water or a 10°C decrease in the temperature of hot water, or even to cut off the delivery of water if the temperature does not reach the value set by the user or it goes beyond a safety threshold (e.g. 50°C) in case of an interruption in the supply of hot or cold water, respectively.

Furthermore, the interface allows the user to set also a maximum operating time for the device beyond which the delivery is stopped, in order to achieve a water saving.

In a further embodiment, not illustrated, the device can also be provided with a flowmeter at outlet 16c and/or with two flowmeters at inlets 16a, 16b operatively connected to the electronic board 3, in order to monitor the water consumption. In this way, the user can keep track of the water use and possibly set through the interface even a consumption threshold beyond which the device stops the delivery of water, so as to perform the water saving function on the basis of the actual consumption rather than on the basis of the operating time.

In order to ensure the operation of the device even in case of temporary lack of power supply, batteries are also provided (not illustrated) whose automatic recharging is managed by the electronic board 3.

It should be noted that the user interface can be connected to the control unit either through a wire or a wireless connection (e.g. RF), and therefore it can be configured as a control panel and/or a remote.

It is clear that the above-described and illustrated embodiment of the device according to the invention is just an example susceptible of various modifications. In particular, the coupling members 11, 12 between the electric motors 4, 5 and the corresponding temperature and flow rate controls of cartridge 14 may be replaced by other technically equivalent members according to the manufacturing needs.

## Claims

1. Device for mixing hot and cold water with automatic adjustment of water flow rate and temperature through suitable valve means and a thermostatic group respectively driven by two electric motors (4, 5) operatively connected to a control unit (3) that receives the flow rate and temperature settings from a user interface, the water flows to and from the device occurring through two inlets for hot (16a) and cold (16b) water respectively and an outlet (16c) for the mixed water, **characterized in that** said valve means and said thermostatic group consist of a cartridge thermostatic mixing valve (14) with the temperature (14d) and flow rate (14e) controls located axially spaced at a same end of said cartridge (14) opposite to the valve means, and said controls (14d, 14e) being driven by said electric motors (4, 5) that are arranged at a same end of the device opposite to said water inlets (16a, 16b) and outlet (16c), the cartridge (14) being partially received in a hydraulic group (16) in which the inlets for hot (16a) and cold (16b) water are formed in a plane perpendicular to the longitudinal axis (A) of said hydraulic group (16) and respectively connected through relevant axial ducts to the inlets (14a, 14b) of the cartridge (14) while the outlet (14c) for the mixed water of the cartridge (14) is connected through a relevant axial duct to an axial outlet (16c) of the hydraulic group (16).

2. Mixing device according to claim 1, **characterized in that** it further includes a temperature sensor (17) arranged at the mixed water outlet (16c) and operatively connected to the control unit (3) to provide a feedback signal.

3. Mixing device according to claim 1 or 2, **characterized in that** it further includes a flowmeter arranged at the mixed water outlet (16c) and/or two flowmeters arranged at the inlets for the hot (16a) and cold (16b) water, said flowmeter(s) being operatively connected to the control unit (3) to provide a feedback signal.

4. Mixing device according to any of the preceding claims, **characterized in that** the two electric motors (4, 5) are arranged in an overlapping and staggered configuration.

5. Mixing device according to any of the preceding claims, **characterized in that** the cartridge (14) is partially introduced in a casing (1) containing the two electric motors (4, 5) in such a way as to be removable therefrom without requiring the dismounting of any of the two motors (4, 5).

6. Mixing device according to any of the preceding claims, **characterized in that** the two electric motors (4, 5) are stepping motors.

7. Mixing device according to any of the preceding claims, **characterized in that** the user interface is connected to the control unit (3) through a wireless connection.

8. Mixing device according to any of the preceding claims, **characterized in that** it further includes batteries, suitable to allow its operation in the absence of power supply, with automatic recharging managed by the control unit (3).
